Europäisches Patentamt

European Patent Office

Office européen des brevets

(19)

(11) Numéro de publication: **0 277 853 B1**

(12) **FASCICULE DE BREVET EUROPEEN**

(45) Date de publication du fascicule du brevet:
14.03.90

(51) Int. Cl.⁴: **F01D 5/08, F02C 7/18**

(21) Numéro de dépôt: **88400067.0**

(22) Date de dépôt: **14.01.88**

(54) Disque de compresseur de turbomachine avec accélérateur centripète pour l'aspiration d'air de refroidissement de la turbine.

(30) Priorité: **14.01.87 FR 8700313**

(43) Date de publication de la demande:
**10.08.88 Bulletin 88/32**

(45) Mention de la délivrance du brevet:
**14.03.90 Bulletin 90/11**

(84) Etats contractants désignés:
**DE FR GB**

(56) Documents cités:
EP-A- 0 049 655
FR-A- 1 248 916
FR-A- 1 250 210
FR-A- 1 587 639
FR-A- 2 292 866
FR-A- 2 401 320
FR-A- 2 552 164

(73) Titulaire: **SOCIETE NATIONALE D'ETUDE ET DE CONSTRUCTION DE MOTEURS D'AVIATION, "S.N.E.C.M.A.", 2, boulevard du Général Martial Valin, F-75724 Paris Cédex 15(FR)**

(72) Inventeur: **Stenneler, Jacques Marie Pierre, 10, rue des Guyottes, F-77820 Le Chatelet En Brie(FR)**
Inventeur: **Naudet, Jacky, 9, place de la Rémise, F-91000 Evry(FR)**

(74) Mandataire: **Moinat, François et al, S.N.E.C.M.A. Service des Brevets Boîte Postale 81, F-91003 Evry Cédex(FR)**

ACTORUM AG

## Description

La présente invention a pour objet un disque de compresseur de turbomachine avec accélérateur centripète pour l'aspiration d'air de refroidissement de la turbine.

Dans les moteurs refroidis par l'intérieur du rotor du compresseur haute pression l'air de refroidissement destiné aux disques et aubes de turbine est en général prélevé dans la veine du compresseur par des orifices percés dans les viroles du tambour du compresseur puis acheminé vers la turbine par l'intérieur du tambour.

Ces perçages présentent l'inconvénient d'introduire des contraintes de flexion qui limitent la valeur admissible du rayon maximal de la virole. Un tel dispositif est montré dans le document FR 1 248 916. Des perçages sont réalisés dans les viroles du tambour entre deux disques et un moyen de guidage de l'air en forme de cavalier comportant une nervure centrale est vissé ou riveté sous lesdites viroles. Ceci impose de percer, outre les orifices de prélèvement, des trous pour les vis ou rivets qui augmentent encore les contraintes de flexion que subit le tambour, rendant plus délicate l'utilisation sur les étages de rotor, d'aubes à attaches marteau.

En effet la masse importante de telles attaches entrainerait des efforts centrifuges excessifs sur la jante d'un disque de compresseur en deux parties et aurait tendance à faire écarter les deux demi-disques. La possibilité de placer la virole le plus haut possible permet d'entretoiser efficacement les disques et de s'opposer à la séparation des demi-disques.

Pour éviter ces inconvénients, le brevet EP 0 049 655 propose un dispositif de refroidissement d'une turbine à gaz dans lequel l'air de refroidissement de la turbine est prélevé dans le plan du disque portant les aubes du compresseur par des orifices situés sur les plates-formes des aubes elles-même à attache marteau.

La diminution des contraintes de flexion qui en résulte permet de relever les attaches du tambour sur le disque à un niveau radial voisin de la jante. Cette disposition est particulièrement favorable à la tenue des disques constitués de deux demi-disques soudés par la jante et permet l'usage d'aubes à pied marteau souvent plus lourdes mais moins chères que les aubes brochées classiques. Toutefois on a constaté que la présence des ailettes à l'intérieur de chaque demi-disque introduit des efforts centrifuges dissymétriques qui entrainent à leur tour des déformations des demi-disques et risquent de provoquer à terme une rupture du disque au niveau de la soudure de la jante.

Le brevet FR 2 552 164 propose une solution à ce problème en utilisant un accélérateur centripète qui comprend plusieurs secteurs montés de façon amovible dans l'espace ménagé entre les deux demi-disques du compresseur, chaque secteur étant constitué de deux demi-coquilles présentant sur leur face intérieure des nervures en forme d'aube centripète par lesquelles les demi-coquilles sont assemblées.

L'utilisation d'aubages non intégrés aux faces du disque permet d'obtenir des faces internes des demi-disques qui sont lisses. De ce fait les deux faces sont sensiblement symétriques et les contraintes centrifuges équilibrées.

Toutefois ce dispositif a pour inconvénient de ne pas permettre une alimentation en air par la jante du disque depuis l'espace situé sous les plates-formes des aubes, car les secteurs de l'accélérateur s'étendent à l'intérieur du disque jusque sous la jante, ce qui impose un prélèvement d'air dans le plan médian du disque.

Or, le prélèvement sous cette forme n'est pas satisfaisant car des écoulements parasites secondaires perturbent la pression. Il est donc préférable de prélever l'air en aval de l'aube.

La présente invention a pour but de simplifier les dispositifs précédemment décrits sans en présenter les inconvénients et de permettre le prélèvement d'air en aval des aubes.

Elle a également pour but de réaliser un accélérateur centripète de forme suffisamment simple pour permettre sa réalisation aisée en matériaux composites ce qui assure un gain de masse sur l'ensemble.

L'invention s'applique donc aux disques de compresseur de turbomachine avec accélérateur centripète pour l'aspiration d'air pour le refroidissement de la turbine, le prélèvement d'air au niveau du compresseur étant effectué au travers d'orifices du tambour de compresseur sous les plates-formes des aubes portées par le disque et l'air ainsi aspiré étant amené dans le plan médian du disque de compresseur, lui-même constitué de deux demi-disques, ledit accélérateur centripète comprenant plusieurs secteurs montés de façon amovible dans l'espace ménagé entre les deux demi-disques du compresseur.

Selon une particularité de l'invention, chaque secteur est constitué par une portion de virole circulaire ajourée disposée dans l'alésage du disque et chacune desdites portions comporte une extension radiale externe en forme de lame plane s'étendant dans l'espace ménagé entre les deux demi-disques, chaque paire de lames adjacentes formant avec les bords internes des demi-disques un canal radial en communication avec un orifice du tambour, percé dans la partie aval de la jante du disque.

L'invention sera plus complètement décrite et d'autres caractéristiques explicitées dans le complément de description qui va suivre accompagné de planches de dessins parmi lesquelles :

- la figure 1 est une demi-vue en coupe d'un disque de compresseur de turbomachine incorporant un accélérateur centripète selon l'invention ;
- la figure 2 est une vue en perspective de deux secteurs adjacents de l'accélérateur ;
- la figure 3 est une coupe partielle de la figure 1 selon II ;
- la figure 4 est une vue partielle de la partie basse d'une variante du disque selon l'invention avec collecteur de sortie.

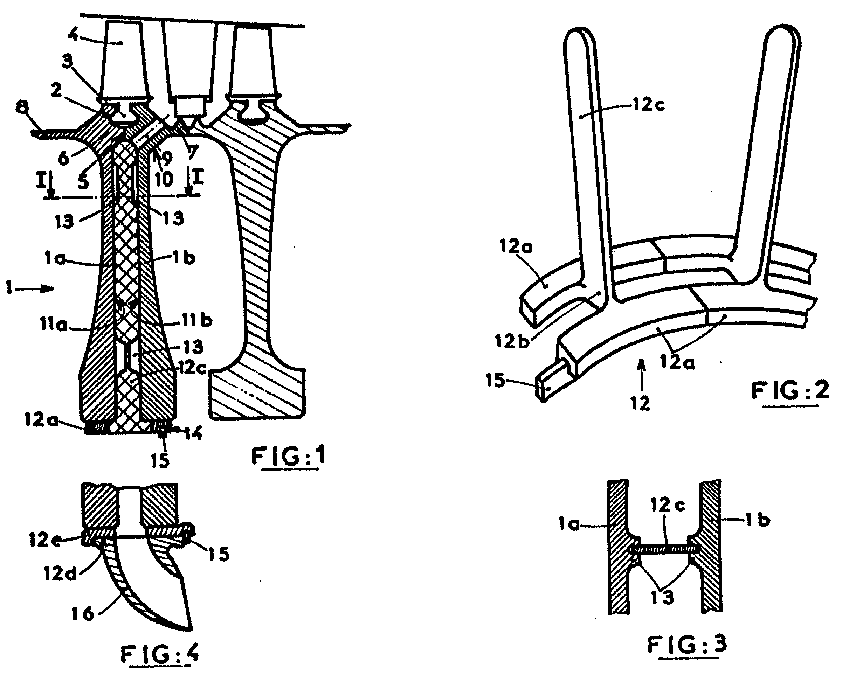

A la figure 1, on a représenté un disque 1 de compresseur pour turbomachine, qui présente sur son pourtour une rainure circulaire 2 dans laquelle sont engagées les attaches marteau 3 des ailettes 4.

Le disque 1 de compresseur est constitué de deux demi-disques 1a, 1b à flancs symétriques qui sont soudés en 5 de façon connue au niveau de la jante 6, laquelle se prolonge par des viroles entretoises 7,8 qui sont ultérieurement soudées entre elles pour constituer le tambour.

Le prélèvement d'air est effectué en aval du disque par des orifices 9 de prélèvement percés parallèlement à la génératrice du bord interne 10 tronconique de la jante du demi-disque aval.

Les orifices 9 débouchent dans l'espace délimité par les faces internes 11a, 11b des demi-disques, espace dans lequel est monté un accélérateur centripète qui comprend plusieurs secteurs. Chacun des secteurs 12 est constitué par une portion de virole circulaire ajourée en forme de "H" comprenant deux "jambes" circulaires 12a et une partie transversale 12b qui possède une extension radiale 12c en forme de lame plane d'une longueur sensiblement égale au rayon de la cavité interne délimitée par les deux demi-disques 1a, 1b. Ces derniers comportent sur leur face interne des rainures radiales 13 régulièrement réparties qui sont usinées sur tout ou partie de la hauteur de la cavité.

Chaque secteur 12 comporte dans sa partie interne une rainure circulaire aval 14 dans laquelle peut être inséré un segment fendu 15 de verrouillage de tous les secteurs entre eux.

Le montage de l'accélérateur centripète s'effectue par insertion de chaque secteur 12 dans la cavité du disque, la lame 12c étant guidée dans les rainures 13 des demi-disques jusqu'à la mise en appui des portions circulaires 12a contre l'alésage interne du disque. Une fois tous les secteurs installés, on vient verrouiller l'ensemble au moyen du segment fendu 15 que l'on vient glisser dans la rainure 14..

Chaque paire de lames adjacentes 12c constitue donc avec les bords internes du disque un canal radial d'accélération centripète pour l'air prélevé par les orifices 9, l'air ainsi accéléré étant dirigé en aval de la turbomachine vers la turbine au voisinage de l'arbre de turbine.

Dans la variante de la figure 4, le bord circulaire interne 12d de la virole formée par chacune des secteurs ou portions de virole 12 reçoit une pièce de révolution 16 constituant un déflecteur pour l'écoulement de l'air vers l'aval en sortie de l'accélérateur centripète. Dans ce cas le bord amont de la partie circulaire 12a des secteurs 12 comporte un becquet circulaire 12e sur lequel vient s'appuyer le déflecteur 16, ce dernier étant verrouillé en position par un segment fendu 15 comme dans la variante précédente.

La simplicité de forme des secteurs permet leur réalisation dans un matériau composite, ce qui assure une plus grande légéreté de l'ensemble accélérateur.

**Revendications**

1. - Disque de compresseur de turbomachine avec accélérateur centripète intégré pour l'aspiration d'air pour le refroidissement de la turbine, le prélèvement d'air au niveau du compresseur étant effectué au travers d'orifices du tambour de compresseur sous les plates-formes des aubes portées par le disque et l'air ainsi aspiré étant amené dans le plan médian du disque de compresseur lui-même constitué de deux demi-disques, ledit accélérateur centripète comprenant plusieurs secteurs montés de façon amovible dans l'espace ménagé entre les deux demi-disques du compresseur caractérisé en ce que chaque secteur (12) est constitué par une portion de virole circulaire ajourée disposée dans l'alésage du disque et en ce que chacune desdites portions (12) comporte une extension radiale externe (12c) en forme de lame plane s'étendant dans l'espace ménagé entre les deux demi-disques (1a,1b), chaque paire de lames adjacentes (12c) formant avec les bords internes (11a,11b) des demi-disques (1a,1b) un canal radial en communication avec un orifice (9) du tambour (7), chacun desdits orifices étant percé dans la partie aval de la jante (6) du disque.

2. - Disque de compresseur suivant la revendication 1 caractérisé en ce que chaque lame radiale (12c) est maintenue en position radiale dans des rainures (13) usinées sur les bords internes (11a,11b) des deux-disques.

3. - Disque de compresseur selon l'une des revendications 1 ou 2 caractérisé en ce que chaque portion de virole circulaire (12) comporte une rainure interne circulaire aval (14) avec laquelle coopère un segment fendu (15) de verrouillage de tous les secteurs (12) entre eux.

4. - Disque de compresseur selon l'une quelconque des revendications 1 à 3 caractérisé en ce que le bord circulaire interne (12d) de la virole formée par chacune des portions de virole (12) reçoit une pièce de révolution (16) constituant un déflecteur pour l'écoulement de l'air vers l'aval en sortie de l'accélérateur centripète.

5. - Disque de compresseur selon l'une des revendications 1 à 4 comportant des aubes à attaches marteau (3) disposées dans une rainure circulaire (2) de la jante (6) du disque caractérisé en ce que les orifices de prélèvement d'air (9) sont percés parallèlement à la génératrice du bord interne tronconique (10) de la jante du demi-disque aval.

**Patentansprüche**

1. Turbomaschinen-Verdichterscheibe mit integriertem Radialventilator zum Ansaugen von Luft zur Kühlung der Turbine, wobei die Luftentnahme in Höhe des Verdichters durch Öffnungen der Verdichtertrommel unter den von der Verdichterscheibe getragenen Schaufelplattformen erfolgt und die so angesaugte Luft in die Medianebene der aus zwei Halbscheiben gebildeten Verdichterscheibe geleitet wird, und wobei der Radialventilator mehrere Sektoren aufweist, die lösbar in dem zwischen den beiden Halbscheiben des Verdichters vorgesehenen Zwischenraum montiert sind, dadurch gekennzeichnet, daß jeder der genannten Sektoren (12) aus einem kreisbogenförmigen gelochten Ringabschnitt besteht, der in der Bohrung der Verdichterscheibe angeordnet ist, und das jeder dieser Ringabschnitte (12) einen äußeren radialen Ansatz (12c) in Form eines ebenen Blatts aufweist, das in den zwischen den beiden Halbscheiben (1a, 1b) vorgesehenen Zwischenraum ragt, wobei jedes Paar von benachbarten Blättern (12c) mit den Innenrändern (11a, 11b) der Halbscheiben (1a, 1b) einen radialen Kanal bildet, der mit einer Öffnung der Trommel (7) in Verbindung steht, und wobei jede dieser Öffnungen in dem stromabwärtigen Teil des Kranzes (6) der Verdichterscheibe angebracht ist.

2. Verdichterscheibe nach Anspruch 1, dadurch gekennzeichnet, daß jedes der radialen Blätter (11c) in seiner radialen Position in Nuten (13) gehalten ist, die auf den Innenrändern (11a, 11b) der beiden Halbscheiben ausgebildet sind.

3. Verdichterscheibe nach einem der Ansprüche 1 oder 2, dadurch gekennzeichnet, daß jeder der kreisbogenförmigen Ringabschnitte (12) eine kreisbogenförmige stromabwärtige Innennut (14) aufweist, mit der ein geschlitztes Segment (15) zur gegenseitigen Verriegelung aller Sektoren (12) zusammenwirkt.

4. Verdichterscheibe nach einem der Ansprüche 1 bis 3, dadurch gekennzeichnet, daß der von den einzelnen Ringabschnitten (12) gebildete kreisförmige Innenrand (12d) des Rings ein Drehteil (16) aufnimmt, das einen zur stromabwärtigen Seite wirkenden Deflektor für die aus dem Radialventilator austretende Luftströmung bildet.

5. Verdichterscheibe nach einem der Ansprüche 1 bis 4 mit Schaufeln (3) mit hammerförmiger Befestigung, die in einer kreisförmigen Nut (2) des Kranzes (6) der Verdichterscheibe angeordnet sind, dadurch gekennzeichnet, daß die Öffnungen (9) zur Luftentnahme parallel zu der Erzeugenden des kegelstumpfförmigen Innenrandes (10) des Kranzes der stromabwärtigen Halbscheibe ausgebildet sind.

**Claims**

1. Gas turbine turbine compressor disc with centripetal accelerator for the aspiration of air for the cooling of the turbine, the draw-off of air from the compressor taking place through holes in the compressor drum under the root mountings of the blades carried by the disc and the air thus drawn off being ducted through the median line of the compressor disc itself which is composed of two half discs, the said centripetal accelerator comprising several segments fitted removably within the space between the two half discs of the compressor characterised in that each segment (12) is made up of a portion of a circular shell with openings and fitted into the bore of the disc and in that each of the said portions (12) comprises a radially outer extension in the form of a flat blade extending into the the space between the two half discs (1a, 1b), each pair of adjacent blades (12c) forming with the inner faces (11a, 11b) of the two half discs (1a, 1b) a radial channel communicating with a hole (9) in the drum (7), each of the said holes being drilled in the downstream part of the rim (6) of the disc.

2. Compressor disc in accordance with Claim 1 characterised in that each radial blade (12c) is maintained in a radial position in the grooves (13) machined in the inner faces (11a, 11b) of the two half discs.

3. Compressor disc in accordance with either of Claims 1 or 2 characterised in that each portion of the circular shell (12) comprises on its downstream side an inner annular groove (14) which works in conjunction with a split segment (15) to interlock all the segments (12).

4. Compressor disc in accordance with any one of Claims 1 to 3 characterised in that the inner circular edge (12d) of the shell formed by each of the portions of the shell (12) accepts a revolving component (16) constituting a deflector for the flow of air at its outlet from the centripetal accelerator, directing it towards the rear.

5. Compressor disc in accordance with one of the Claims 1 to 4 comprising blades with hammerhead roots (3) arranged in a circular slot (2) in the rim (6) of the disc characterised in that the the air draw-off holes (9) are drilled to the angled generatrix (10) of the rim of the downstream disc.

FIG:2

FIG:3

FIG:1

FIG:4